# FASCICULE DE BREVET EUROPEEN

(11) **EP 2 080 463 B1**
(45) Date de publication et mention de la délivrance du brevet: **13.08.2014**
(21) Numéro de dépôt: 09150241.9
(22) Date de dépôt: 08.01.2009
(51) Int. Cl.: A47J 43/26

(54) **Outil à main ou industriel pour casser la coque d'un fruit et procédé d'utilisation d'un tel outil**
Hand- oder Industriewerkzeug zum Knacken der Schale einer Frucht und Anwendungsverfahren dieses Werkzeugs
Hand-held or industrial tool for breaking the shell of a fruit and method for using such a tool

(30) Priorité: 15.01.2008 FR 0850229
(43) Date de publication de la demande: 22.07.2009
(73) Titulaire: Allibert, Jean-Michel, 95100 Argenteuil (FR)
(72) Inventeur: Allibert, Jean-Michel, 95100 Argenteuil (FR)
(74) Mandataire: Tanty, François

(56) Documents cités:
- AU-B2- 530 677
- DE-A1- 1 529 238
- DE-A1- 3 002 242
- FR-A- 628 712
- US-A- 1 647 029
- US-A- 4 255 855

## Description

La présente invention concerne les procédés et outils pour briser la coque (ou coquille) des fruits à coque.

De nombreux casse-noix existent sur le marché.

Des casse-noix réalisés par des assemblages complexes comprenant par exemple des dispositifs de démultiplication d'effort ou des parties mobiles, sont divulgués dans les documents US 1 647 029, DE 1 529 238, AU 530 677 et US 2 571 214.

Une réalisation courante se présente sous la forme d'une pince comportant deux branches articulées avec, sur chaque branche, une encoche dont la taille est adaptée aux fruits à ouvrir.

Bien que très répandus, ces casse-noix n'offrent pas entière satisfaction notamment parce qu'il existe le risque, lors de l'utilisation, que l'utilisateur se pince un doigt entre les branches. De plus, la force à exercer initialement est souvent trop grande pour permettre à un enfant d'utiliser seul le casse-noix. Enfin, une fois la coque brisée, l'effort doit être rapidement relâché sous peine d'endommager le fruit.

Un autre modèle de casse-noix fréquemment rencontré consiste en une vis qui peut venir briser une noix retenue dans un logement d'axe perpendiculaire à la vis.

Un tel dispositif permet d'exercer la force très progressivement sur le fruit, mais en revanche le déplacement de la vis s'avère rapidement fastidieux lorsque plusieurs fruits doivent être ouverts.

Il existe par conséquent un besoin pour perfectionner encore les outils et procédés pour casser la coque des fruits à coque et pour bénéficier d'un procédé facile à mettre en oeuvre et d'un outil qui soit simple d'utilisation, qui puisse être fabriqué à un coût relativement faible et qui préserve le fruit.

Selon l'un de ses aspects, l'invention a pour objet un procédé selon la revendication 14.

Une distance de la zone frontale par rapport à la zone d'impact est par exemple réglée, précédemment à l'étape consistant à percuter la coque, par un déplacement d'une bague formant la zone frontale, relativement à une tige qui constitue à la fois la partie de préhension et la partie de percussion.

Grâce à l'invention, la force nécessaire pour briser la coque peut être exercée sans effort important de l'utilisateur, car il suffit de soulever l'organe impacteur d'une hauteur suffisante tout en l'accompagnant et de le laisser tomber sur le fruit.

A l'action de casse de la coque s'oppose la réaction qui stoppe la descente de l'outil; cela permet d'avoir une casse de la coque sans projection d'éclat et un fruit délivré entier.

L'écrasement du fruit est au moins en partie empêché par la venue de la zone frontale en butée sur la surface d'appui. Le procédé est par exemple mis en oeuvre manuellement mais on ne sort pas du cadre de la présente invention lorsque le procédé est mis en oeuvre industriellement.

L'invention a encore pour objet, selon un autre de ses aspects, un outil à main pour casser la coque d'un fruit à coque, selon la revendication 1.

La partie de percussion présente une pluralité de faces définissant chacune une zone d'impact. La partie de préhension manuelle est située entre deux zones d'impact. Les zones d'impact entre lesquelles est située la partie de préhension, sont par exemple de dimensions différentes et destinées à des fruits à coque différents.

Un tel outil est utilisable aussi bien par les gauchers que les droitiers. L'outil à main a par exemple une forme de diabolo. De préférence, le matériau utilisé pour réaliser la partie de percussion est suffisamment résistant pour supporter les chocs dus au pilonnage. Les zones d'impact sont par exemple réalisées chacune par une pièce métallique rapportée sur la partie de préhension.

Dans un exemple de mise en oeuvre de l'invention, la zone frontale entoure la zone d'impact, étant de préférence définie par une lèvre annulaire qui entoure continûment la zone d'impact, ou en variante qui ne l'entoure que partiellement.

La zone frontale peut être fixe relativement à la zone d'impact, les zones frontale et d'impact étant par exemple venues par usinage d'une même pièce ou par moulage par injection, par emboutissage ou autre procédé ou résultant de l'assemblage de plusieurs pièces.

En variante, la zone frontale est de positionnement réglable relativement à la zone d'impact, ce qui peut permettre par exemple d'avancer ou de reculer la zone d'impact selon la grosseur du fruit. La partie de préhension peut comporter un manche pilon fixe ou amovible permettant le réglage de la hauteur de la lèvre.

La zone d'impact peut être définie par un matériau différent de celui de la partie de préhension, par exemple un matériau plus dur.

La profondeur de la zone d'impact, mesurée relativement à la zone frontale, est par exemple comprise entre 6 et 60 mm, mieux de 18 à 21 mm pour les noix et de 10 à 14 mm pour les noisettes.

La plus grande dimension transversale de la zone d'impact, notamment son diamètre, est par exemple comprise entre 30 et 120 mm, mieux de 61 à 65 mm pour les noix et de 62 à 64 mm pour les noisettes.

La zone d'impact peut être sphérique, mais d'autres formes sont possibles. La masse de l'outil est par exemple comprise entre 200 et 999 g.

Les zones d'impact sont par exemple sphériques, coniques ou planes.

La partie de préhension et la partie de percussion peuvent être réalisées de façon monolithique, de préférence par moulage de matière, notamment par moulage ou injection d'une résine. Les parties de percussion et de préhension sont par exemple réalisées d'une seule pièce ou par assemblage de plusieurs pièces. Lorsque la résine est transparente, celle-ci peut enrober au moins une inclusion décorative, notamment une inclusion formée par un fruit à coque.

Lorsque l'outil comporte une résine, la zone d'impact peut être renforcée ou être constituée par un métal.

La partie de préhension peut faire par exemple entre 5 et 35 cm de hauteur, afin de faciliter le maintien de l'outil, et la plus grande dimension transversale de la partie de préhension peut être comprise entre 2 et 5 cm.

L'outil comporte une deuxième partie de percussion. La partie de préhension est située entre les deux parties de percussion, les première et deuxième parties de percussion définissant des zones d'impact de dimensions différentes, destinées à des fruits à coque différents, notamment des noix et noisettes.

Les parties de préhension et de percussion peuvent recevoir au moins un décor ou objet lumineux, ludique, ou utilitaire, par exemple dé électronique, sablier, horloge, thermomètre, hygromètre, minuteur ...

L'invention pourra être mieux comprise à la lecture de la description détaillée qui va suivre, d'exemples de mise en oeuvre non limitatifs de celle-ci, et à l'examen du dessin annexé, sur lequel :
- la figure 1, utile à la compréhension de certains aspects de l'invention mais non conforme à l'invention, représente de manière schématique, en élévation, un exemple d'outil en forme générale de pilon,
- la figure 2 est une coupe longitudinale partielle selon II-II de la figure 1,
- la figure 3 est une coupe longitudinale, schématique et partielle, d'une variante utile à la compréhension de certains aspects de l'invention mais non conforme à l'invention,
- la figure 4 est une vue analogue à la figure 2 d'une variante de réalisation de la partie de percussion,
- les figures 5 et 6 représentent de manière schématique, en perspective, des exemples d'outils réalisés conformément à l'invention,
- la figure 7 représente, en élévation, une variante de réalisation de l'outil, non conforme à l'invention mais utile à la compréhension de certains de ses aspects.
- les figures 8 à 12 illustrent d'autres variantes de réalisation de l'outil, avec une forme générale de diabolo.

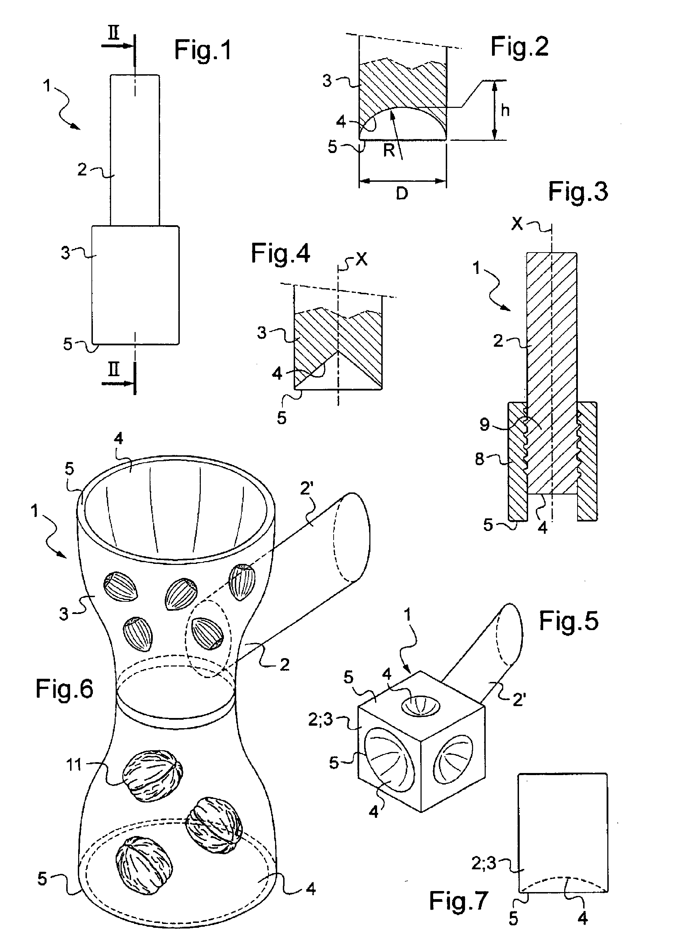

L'outil 1 représenté à la figure 1 comporte une partie de préhension manuelle 2 et une partie de percussion 3 située dans le prolongement de la partie de préhension 2. Cette dernière peut être lisse ou avoir une forme ergonomique, avec éventuellement des alvéoles pour recevoir les doigts ou des décors de tout type.

La partie de percussion 3 définit une zone d'impact 4 qui est généralement concave vers le bas, comme on peut le voir sur la figure 2, étant située en retrait d'une zone frontale 5 qui entoure la zone d'impact 4 et qui est susceptible de venir en butée sur une surface d'appui sur laquelle repose le fruit à casser, après ouverture de la coque.

Dans l'exemple considéré, la zone frontale 5 est formée par une lèvre annulaire symétrique de révolution autour de l'axe longitudinal X de l'outil 1.

La zone d'impact est définie par exemple par une surface sphérique de diamètre compris entre 30 et 120 mm, par exemple de l'ordre de 63 mm.

Le fond de la zone d'impact 4 est situé en retrait de la zone frontale 5 d'une distance *h* comprise entre 6 et 60 mm, par exemple de 20 mm. Une telle géométrie convient tout particulièrement aux noix.

La masse de l'outil est par exemple comprise entre 400 et 600 grammes. L'invention n'est pas limitée à une zone d'impact 4 de forme sphérique et la zone d'impact 4 peut par exemple être plane et perpendiculaire à l'axe longitudinal X de l'outil, comme illustré à la figure 3, ou conique comme illustré à la figure 4.

La zone frontale 5 peut être située à une distance fixe par rapport à la zone d'impact 4, comme c'est le cas dans l'exemple de la figure 2, ou réglable comme c'est le cas dans l'exemple de la figure 3.

Dans l'exemple de cette figure, la zone frontale 5 est définie par le bord inférieur d'une bague 8 qui peut être déplacée relativement à une tige 9 qui constitue à la fois la partie de préhension 2 et la partie de percussion.

La bague 8 est par exemple vissée sur la tige 9. Des repères peuvent être imprimés ou gravés sur la tige 9 pour faciliter le positionnement de la bague 8 relativement à celle-ci, en fonction du fruit à briser.

La bague 8 peut être réalisée, le cas échéant, en un matériau élastiquement déformable, de façon à amortir le choc contre la surface d'appui sur laquelle repose le fruit.

Un même outil peut comporter plusieurs zones d'impact destinées à des fruits différents, de dimensions correspondantes.

A titre d'exemple, on a représenté à la figure 5 un outil 1 comportant plusieurs faces 5, avec sur chaque face 5 une cavité définissant une zone d'impact 4. L'outil 1 présente par exemple une forme polyédrique, notamment cubique, avec au moins trois zones d'impact 4 et peut être équipé, le cas échéant, d'un manche pilon 2', amovible.

Dans la variante de la figure 6, l'outil 1 présente une partie de préhension 2 qui peut être équipé, le cas échéant, d'un manche pilon 2', amovible et, de part et d'autre de celle-ci, deux zones d'impact 4 destinées respectivement à deux fruits à coque différents, par exemple des noix d'un coté et des noisettes de l'autre.

L'outil 1 de la figure 6 présente une forme générale de diabolo, avec deux faces opposées définissant les zones d'impact. La partie de préhension 2 présente un rétreint, sensiblement à mi-hauteur.

L'outil 1 est par exemple moulé dans une résine qui peut être transparente et qui enrobe des inclusions décoratives, par exemple formées de fruits ou de morceaux de fruits de même type que ceux dont la coque est destinée à être cassée par l'outil ou des objets (salière, sablier, dispositifs électroniques et/ou lumineux, etc..).

La figure 7 représente une variante de réalisation dans laquelle la partie de percussion sert également de partie de préhension.

La partie de percussion a par exemple une forme extérieure généralement cylindrique, comme sur la figure 1.

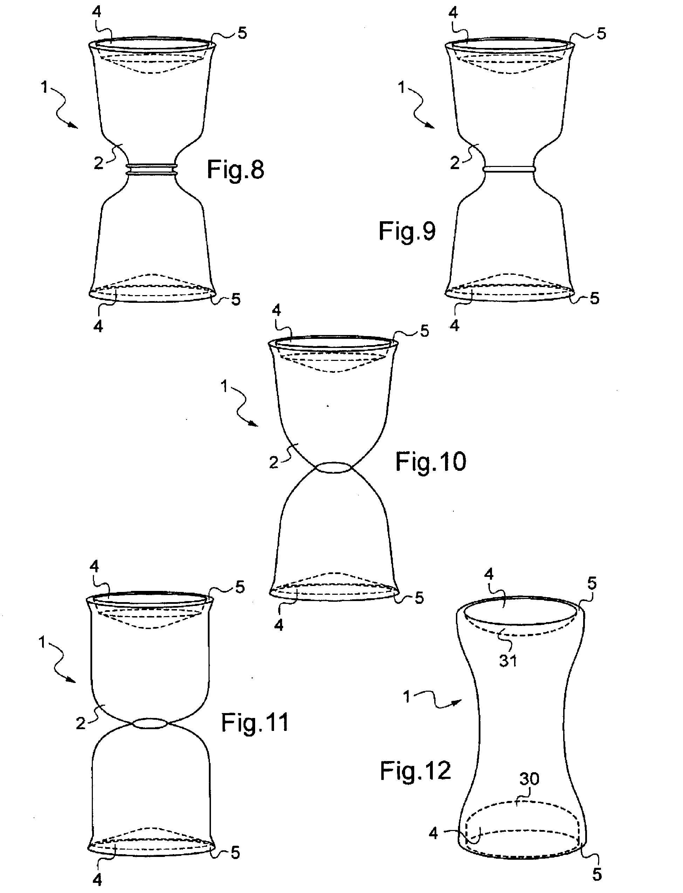

Les figures 8 à 12 représentent des variantes de réalisation de l'outil. Sur la figure 12, on voit que les zones d'impact sont définies par des pièces 30 et 31 rapportées sur la partie de préhension. Ces pièces 30 et 31 sont par exemple métalliques et la partie de préhension 2 est par exemple en résine. Les pièces 30 et 31 peuvent être collées sur la partie de préhension ou cette dernière peut être surmoulée sur ces pièces.

Bien entendu, l'invention n'est pas limitée aux exemples illustrés.

On peut notamment apporter de nombreuses modifications à la zone d'impact et à la zone frontale ainsi qu'à la zone de préhension.

Par exemple, la zone frontale peut ne pas être continue tout autour de la zone d'impact mais être discontinue.

L'outil peut être réalisé dans tout type de matière, et sa forme peut lui être donnée par tout moyen de fabrication tel que le moulage par injection, l'emboutissage, l'usinage, etc. De préférence, la matière utilisée est compatible avec un usage alimentaire.

L'outil peut renfermer, au sein de la partie de préhension par exemple, un liquide à des fins de décoration.

L'outil peut être décoré de diverses façons et intégrer éventuellement au moins une source lumineuse, dirigée par exemple vers le fruit à ouvrir.

Pour utiliser l'outil, par exemple celui de la figure 1, il suffit de le soulever d'une hauteur raisonnable et de le faire tomber, en le relâchant ou en l'accompagnant dans sa chute, sur le fruit dont la coque doit être brisée.

La venue en butée de la zone frontale sur la surface d'appui sur laquelle repose le fruit permet de casser la coque du fruit sans abimer outre mesure le fruit. De plus, la lèvre dont le bord définit la zone frontale permet de retenir les éclats.

L'outil peut encore être utilisé dans une installation industrielle pour casser les coques des fruits secs, la machine déplaçant l'outil étant par exemple approvisionnée en fruits dont la coque doit être brisée par un bol vibrant ou autre procédé.

L'invention s'applique à tout type de fruit à coque, tels que les noix, noisettes, amandes, pistaches, noyaux d'abricots, etc.

## Revendications

1. Outil à main (1) pour casser la coque d'un fruit à coque comportant:
- une partie de percussion (3) et une partie de préhension manuelle, **caractérisé par le fait que** la partie de percussion présente une pluralité de faces définissant chacune une zone d'impact (4) du fruit située en retrait d'une zone frontale (5) susceptible de venir en butée sur la surface d'appui sur laquelle repose le fruit après cassure de la coque, et **par le fait que** la partie de préhension manuelle (2) est située entre deux zones d'impact.

2. Outil à main selon la revendication 1, dans lequel les deux zones d'impact entre lesquelles est située la partie de préhension manuelle, sont de dimensions différentes et destinées à des fruits à coque différents.

3. Outil selon la revendication 1 ou 2, la zone frontale (5) étant définie par une lèvre annulaire qui entoure complètement la zone d'impact ou une lèvre qui entoure partiellement la zone d'impact.

4. Outil selon l'une des revendications 1 à 3, la zone frontale étant fixe relativement à la zone d'impact.

5. Outil selon l'une des revendications 1 à 3, la zone frontale étant de positionnement réglable relativement à la zone d'impact.

6. Outil à main selon l'une des revendications 1 à 5, ayant une forme de diabolo.

7. Outil à main selon l'une des revendications 1 à 7, les zones d'impact étant chacune définie par une pièce métallique rapportée sur la partie de préhension.

8. Outil selon l'une quelconque des revendications 1 à 7, les zones d'impact étant sphériques, coniques ou planes.

9. Outil selon l'une quelconque des revendications 1 à 8, la partie de préhension (2) et la partie de percussion (3) étant réalisées de façon monolithique avec éventuellement la partie de percussion servant également de partie de préhension ou étant réalisées par assemblage de plusieurs pièces.

10. Outil selon la revendication précédente, la partie de préhension et la partie de percussion étant formées d'une résine transparente enrobant au moins une inclusion.

11. Outil selon la revendication 4, de la partie préhension comportant un manche pilon, fixe ou amovible, permettant le réglage de la hauteur de la lèvre (5), la zone frontale (5) entourant la zone d'impact.

12. Outil selon l'une quelconque des revendications 1 à 10, les parties de préhension et de percussion recevant au moins un décor ou objet lumineux, ludique ou utilitaire.

13. Outil selon l'une des revendications 1 à 12, une des zones d'impact étant destinée à des noix, une autre zone d'impact étant destinée à des noisettes.

14. Procédé pour briser la coque d'un fruit à coque reposant sur une surface d'appui, comportant l'étape consistant à percuter la coque du fruit avec un outil à main (1) selon l'une quelconque des revendications précédentes présentant une zone d'impact (4) avec le fruit située en retrait d'une zone frontale (5) susceptible de venir en butée sur la surface d'appui après cassure de la coque, une distance de la zone frontale par rapport à la zone d'impact étant réglée, précédemment à l'étape consistant à percuter la coque, par un déplacement d'une bague (8) formant la zone frontale, relativement à une tige (9) qui constitue à la fois la partie de préhension et la partie de percussion.

15. Procédé selon la revendication 14, étant mis en oeuvre manuellement.

## Patentansprüche

1. Handwerkzeug (1) zum Zerbrechen der Schale einer Schalenfrucht, mit:
- einem Stoßteil (3) und einem Handgriffteil,
**dadurch gekennzeichnet, dass** der Stoßteil mehrere Flächen aufweist, die jeweils eine Stoßzone (4) für die Frucht definieren, die gegenüber einer frontalen Zone (5) zurück liegt und mit der Auflagefläche in Anlage kommen kann, auf der die Frucht nach dem Zerbrechen der Schale liegt, und dadurch, dass der Handgriffteil (2) sich zwischen zwei Stoßzonen befindet.

2. Handwerkzeug nach Anspruch 1, bei dem die beiden Stoßzonen, zwischen denen sich der Handgriffteil befindet, unterschiedliche Abmessungen haben und für unterschiedliche Schalenfrüchte bestimmt sind.

3. Werkzeug nach Anspruch 1 oder 2, bei dem die frontale Zone (5) durch eine ringförmige Lippe definiert ist, die die Stoßzone vollständig umgibt, oder durch eine Lippe, die die Stoßzone teilweise umgibt.

4. Werkzeug nach einem der Ansprüche 1 bis 3, bei dem die frontale Zone in Bezug auf die Stoßzone fest ist.

5. Werkzeug nach einem der Ansprüche 1 bis 3, bei dem die frontale Zone in Bezug auf die Stoßzone positionsverstellbar ist.

6. Handwerkzeug nach einem der Ansprüche 1 bis 5, in der Form eines Diabolos.

7. Handwerkzeug nach einem der Ansprüche 1 bis 7, bei dem die Stoßzonen jeweils durch ein Metallteil gebildet sind, das sich an den Griffteil anschließt.

8. Werkzeug nach einem der Ansprüche 1 bis 7, bei dem die Stoßzonen sphärisch, konisch oder eben sind.

9. Werkzeug nach einem der Ansprüche 1 bis 8, bei dem der Griffteil (2) und der Stoßteil (3) in einem Stück ausgebildet sind, wobei der Stoßteil ggf. auch als Griffteil dient, oder aus mehreren Teilen zusammengesetzt sind.

10. Werkzeug nach dem vorstehenden Anspruch, bei dem der Griffteil und der Stoßteil aus einem transparentem Kunststoff gebildet sind, in den mindestens ein Einschluss eingebettet ist.

11. Werkzeug nach Anspruch 4, bei dem der Griffteil einen festen oder lösbaren Stößelschaft aufweist, der die Einstellung der Höhe der Lippe (5) erlaubt, wobei die frontale Zone (5) die Stoßzone umgibt.

12. Werkzeug nach einem der Ansprüche 1 bis 10, bei dem die Griff- und Stoßteile wenigstens ein Dekor oder Leucht-, Spiel- oder Gebrauchsobjekt aufnehmen.

13. Werkzeug nach einem der Ansprüche 1 bis 12, bei dem eine der Stoßzonen für Haselnüsse bestimmt ist und eine andere Stoßzone für Walnüsse bestimmt ist.

14. Verfahren zum Zerbrechen der Schale einer Schalenfrucht, die auf einer Auflagefläche liegt, mit einem Schritt, der darin besteht, dass die Schale der Frucht mit einem Handwerkzeug (1) nach einem der vorstehenden Ansprüche zerstoßen wird, das eine Stoßzone (4) aufweist, wobei die Frucht gegenüber einer frontalen Zone (5) zurückliegt, die in der Lage ist, nach dem Zerbrechen der Schale mit der Auflagefläche in Anlage zu kommen, wobei ein Abstand der frontalen Zone zu der Stoßzone vor dem Schritt, der im Zerstoßen der Schale besteht, dadurch eingestellt wird, dass ein Ring (8), der die frontale Zone bildet, relativ zu einem Stößel (9) verstellt wird, der zugleich den Griffteil und den Stoßteil bildet.

15. Verfahren nach Anspruch 14, das von Hand ausgeführt wird.

## Claims

1. Handheld tool (1) for breaking the shell of a hard-shelled fruit, comprising a percussion part (3) and a manual handling part, **characterized in that** the percussion part has a plurality of faces each defining an impact zone (4) of the fruit situated standing back from a front zone (5) which is liable to come to rest on the support surface on which the fruit rests after breakage of the shell, and **in that** the manual handling part (2) is situated between two impact zones.

2. Handheld tool according to claim 1, wherein the two impact zones between which the manual handling part is situated are of different dimensions and intended for different hard-shelled fruit.

3. Tool according to claim 1 or 2, wherein the front zone (5) is defined by an annular lip which fully surrounds the impact zone or by a lip which partially surrounds the impact zone.

4. Tool according to any of claims 1 to 3, wherein the front zone is fixed relative to the impact zone.

5. Tool according to any of claims 1 to 3, wherein the front zone is positioned adjustably in relation to the impact zone.

6. Handheld tool according to any of claims 1 to 5 with the form of a double-conical roller.

7. Handheld tool according to any of claims 1 to 6, wherein the impact zones are each defined by a metal part offset to the handling part.

8. Tool according to any of claims 1 to 7, wherein the impact zones are spherical, conical or flat.

9. Tool according to any of claims 1 to 8, wherein the handling part (2) and the percussion part (3) are made of one piece, where applicable with the percussion part also serving as a handling part, or are produced by assembly of several pieces.

10. Tool according to the preceding claim, wherein the handling part and the percussion part are formed from a transparent resin encasing at least one inclusion.

11. Tool according to claim 4, wherein the handling part comprises a hammer handle, fixed or removable, allowing adjustment of the height of the lip (5), wherein the front zone (5) surrounds the impact zone.

12. Tool according to any of claims 1 to 10, wherein the handling and percussion parts contain at least one décor or luminous, fun or utility object.

13. Tool according to any of claims 1 to 12, wherein one of the impact zones is intended for large nuts, the other impact zone for small nuts.

14. Method for breaking the shell of a hard-shelled fruit resting on a support surface, comprising the step of hitting the shell of the fruit with a handheld tool (1) according to any of the preceding claims, having an impact zone (4) with the fruit situated standing back from a front zone (5) which is liable to come to rest on the support surface after breakage of the shell, wherein a distance of the front zone from the impact zone is set, prior to the step of hitting the shell, by movement of a ring (8) forming the front zone relative to a rod (9) which constitutes both the handling part and the percussion part.

15. Method according to claim 14 which is implemented manually.
